Europäisches Patentamt

European Patent Office

Office européen des brevets

(19)

(11)  **EP 0 950 121 B1**

(12)  **FASCICULE DE BREVET EUROPEEN**

(45) Date de publication et mention
de la délivrance du brevet:
**20.03.2002   Bulletin 2002/12**

(21) Numéro de dépôt: **97945713.2**

(22) Date de dépôt: **08.12.1997**

(51) Int Cl.$^7$: **C21D 11/00**, G05D 23/00

(86) Numéro de dépôt international:
**PCT/CH97/00459**

(87) Numéro de publication internationale:
**WO 98/27236 (25.06.1998 Gazette 1998/25)**

(54) **PROCEDE DE COMMANDE DE L'APPORT OU DU PRELEVEMENT D'ENERGIE A UNE MASSE DE SUBSTANCE**

VERFAHREN ZUR STEUERUNG DER ENERGIE-ZU-RESP.- ABFÜHRUNG AN EINER
MATERIALMASSE

METHOD FOR CONTROLLING THE SUPPLY OF ENERGY TO OR DRAWING OF ENERGY FROM
A MASS OF SUBSTANCE

(84) Etats contractants désignés:
**AT BE DE ES FR GB IT NL SE**

(30) Priorité:  **09.12.1996   CH 301196**

(43) Date de publication de la demande:
**20.10.1999   Bulletin 1999/42**

(73) Titulaire: **TECHNOFIN LTD.**
**Port Louis, Mauritius (MU)**

(72) Inventeur: **Rossier, René**
**3964 Muraz (CH)**

(74) Mandataire: **Troesch Scheidegger Werner AG**
**Patentanwälte**
**Postfach**
**8032 Zürich (CH)**

(56) Documents cités:
EP-A- 0 099 417          DE-A- 3 108 470
DE-B- 1 067 836          FR-A- 1 140 130
FR-A- 1 365 470          US-A- 2 788 175

Printed by Jouve, 75001 PARIS (FR)

**Description**

La présente invention concerne un procédé pour commander l'apport ou le prélèvement de chaleur à une masse de substance.

Le FR-A-1140130 divulgue un procédé pour commander l'apport de chaleur nécessaire en vue de maintenir la température de l' ensemble d' une substance préalablement chauffée à une température souhaitée. La mise en oeuvre pratique du procédé connu fait utilisation de dispositifs connus, comme par exemple de capteurs d' énergie thermique. En vue du fait que le procédé n'est effectué qu' au cours du maintien de la température de l' ensemble d' une substance chauffée, il ne permet pas une commande optimale de l' apport d' énergie pendant le processus entier.

Le US-A-2788175 décrit un procédé analogue à celui qui vient d' être décrit, c' est -à- dire la commande de la température d' une substance chauffée une fois sa température souhaité est atteinte. Une commande optimale de l' apport d' énergie pendant le réchauffement n' est pas possible.

La présente invention conçerne plus particulièrement un procédé pour commander, d'une manière optimal du point de vue énergie et temps, l'apport ou le prélèvement de chaleur à ou respectivement sur une substance devant être soumise à un traitement thermique, un tel procédé a été décrit dans les brevets EP-A-0 099 417 B1 ou correspondants DE-A-31 08470 C2 et DE-A-31 53413 C2, le premier formant partie intégrante de la présente demande.

Ce procédé présente un inconvénient essentiel. En effet, avec ce procédé, le dialogue entre l'évolution des phases de la substance et un ordinateur, s'exécute par l'intermédiaire d'une thermosonde. La thermosonde, pour des raisons de contrôles non destructifs de la substance, se place à peau de la dite substance, et pour approximer l'état d'énergie à coeur de cette même substance il faut instruire l'ordinateur d'un modèle de calculs qui oblige à introduire des durées de sécurité.

Le but de la présente invention est d'éviter ces inconvénients et ainsi de gagner les durées qui étaient affectées à la sécurité par des mesures qui traduisent le moment où la température souhaitée est atteinte à coeur de la masse de substance, sans endommagement de celle-ci.

Ceci est obtenu à l'aide d'un procédé conforme au libellé de la revendication 1.

L'invention va être expliquée ci-après à titre d'exemple en référence aux figures suivantes:

- figure 1 qui est identique à la figure 3 du brevet EP-A-0 099 417,
- figure 2 qui représente les courbes de températures lors d'un essai, à divers endroits d'une masse de substance.

Comme il ressort du brevet EP mentionné ci-dessus, dans le cadre du procédé connu, il s'agit fondamentalement d'emmener de façon optimale une substance, désignée ci-après sous le terme de phase matière, d'une température initiale à une température finale, soit en la chauffant ou en la refroidissant à partir de sa surface marginale à l'aide d'unités de chauffage ou de refroidissement, soit en la soumettant à un rayonnement calorifique, par exemple une énergie à micro-ondes.

Dans le brevet EP ci-dessus les calculs thermodynamiques d'optimum ont conduit à la conclusion que le procédé mentionné, optimisé du point de vue énergie et temps en fonction des critères choisis peut être traduit par les deux équations finales qui suivent.

**Equation finale 1:**

$$v_k = V(0) \cdot \frac{\Delta T(2)}{\Delta T(0)}k \cdot \left[ S_T \cdot \Delta T(0) + S_v \cdot V(0) \right]^{k-1}$$

Equation finale 2:

$$\frac{\Delta T(1)}{\Delta T(2)} = \frac{y}{x} \cdot \sqrt{\frac{\Delta T_m^2(2) + S_t^2 \cdot (x \cdot \Delta \tau)^2}{\Delta T_m^2(1) + S_t^2 \cdot (y \cdot \Delta \tau)^2}}$$

dans lesquelles équations

$$v(0) = \frac{dT}{dt} \qquad \frac{y}{x} = \frac{T'_s - T_m(0)}{T_m(2) - T'_s}$$

Grandeurs de mise à l'échelle:

$$S_v = \frac{1}{v(0)} \qquad S_T = \frac{1}{dT_E} \qquad S_t = \frac{1}{dt_E}$$

où

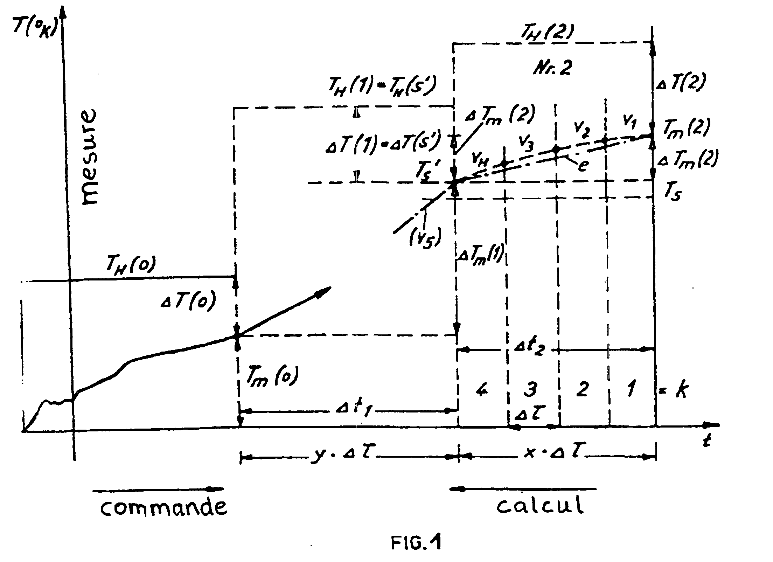

k représente la numérotation d'un intervalle de temps, portée dans le sens rétrograde sur la figure 1;
$\Delta\tau$ est la longueur d'un intervalle de temps;
$\Delta T_m$ est un intervalle de température associé à l'énergie absorbée;
$v_k$ est le taux de variation de la température pendant l'intervalle k.

Dans ces équations $\Delta T_m(2)$ est à associer à l'énergie absorbée pendant l'intervalle de temps 2 et $\Delta T_m(1)$ à l'énergie qui est absorbée pendant l'intervalle de temps 1 et alors liée à la différence de température entre T'S et Tm (0).

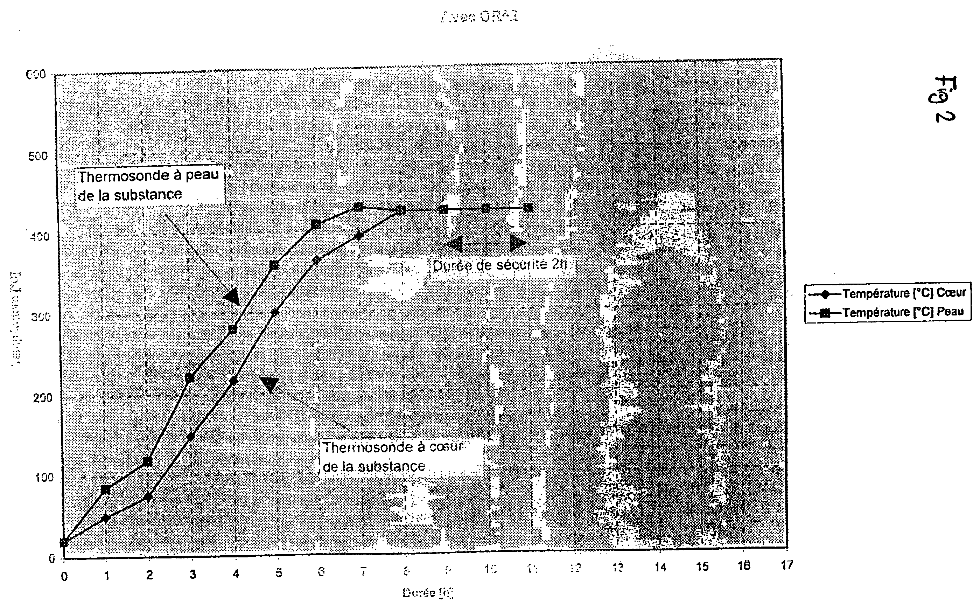

Pour résumer, on montre à l'aide de la figure 2 pourquoi le nouveau procédé permet de diminuer la durée d'un traitement thermique par suppression de la durée de sécurité. Cette figure présente des courbes de chauffage à divers endroits d'une substance. De tels enregistrements sont effectués pour des essais. Dans la pratique industrielle, généralement, les thermosondes sont placées à peau de la substance et non à coeur. Pour garantir que toute la masse de la substance a atteint la température souhaitée, on voit sur la dite figure que, dans cet essai, l'on a fait usage d'une durée de sécurité de 2 heures. Avec les capteurs d'énergie thermique, par exemple, les thermofluxmètres, cette durée de sécurité peut être annulée puisque l'on mesure à quel instant la température est atteinte à coeur. En effet, à ce moment le flux thermique absorbé par la substance à la température souhaitée approche de la valeur nulle.

On remarque donc que les capteurs d'énergie thermique, par exemple les thermofluxmètres, les débimètres (pour un chauffage au gaz), les ampèrmètres (pour un chauffage électrique) renseignent si la température est atteinte au coeur de la masse de substance alors que le dit capteur d'énergie thermique peut être placé à peau de la masse de substance, ou à l'intérieur du four, ou sur les parois du four, ou sur les canaux d'emmenée de l'agent chauffant.

L'emplacement du capteur d'énergie thermique est lié à la précision que l'on veut obtenir sur la mesure. Par exemple pour le pilotage de toute la chauffe et du maintien, le capteur d'énergie thermique sera placé de préférence à peau de la masse de substance; et pour le pilotage qui ne régule que les maintiens, l'emplacement pourra être à l'intérieur du four, ou sur les parois du four, ou sur les canaux d'emmenée de l'agent chauffant.

L'absence de durées de sécurité lors de maintien peut être autorisée non seulement aux températures élevées de transformations finales, mais aussi lors de maintiens à températures de créations de phases transitoires de la substance. Ceci est particulièrement utile lors de chauffage par étapes, comme cela est le cas dans le brevet EP ci-dessus.

De la même façon que l'évolution temporelle d'une courbe optimale du point de vue énergie et temps de chauffage ou de refroidissement peut être représentée par des modèles mathématiques, l'évolution temporelle optimale du point de vue énergie et temps du flux thermique lors de l'apport ou du prélèvement de chaleur à une et respectivement d'une substance peut aussi être décrite par des modèles mathématiques. Ces modèles donnent à l'ordinateur la possibilité d'assister les transformations des phases matières en totalité de masse au bon instant et pendant la durée requise. Ceci même dans le cas où des appareils de contrôles tombent en panne, y compris le capteur d'énergie thermique, par exemple le thermofluxmètre. Pour autant, bien entendu, que la programmation à prévu le cas et a mis en mémoire de l'odinateur les décisions tirées des données mesurées par le capteur d'énergie thermique, par exemple un thermofluxmètre, en état de bon fonctionnement.

## Revendications

1. Procédé pour commander l'apport ou le prélèvement de chaleur à une masse de substance devant être soumise à un traitement thermique en vue d'amener l'ensemble de cette masse à une température souhaitée, procédé dans lequel ladite masse est chauffée ou refroidie par étapes successives qui tiennent compte des phases de transformations transitoires et des phases de transformations finales de toute la masse de substance, le procédé est optimisé du point de vue énergie et temps en fonction des critères choisis traduit par les deux équations finales suivantes:

Equation finale 1:

$$v_k = V(0) \cdot \frac{\Delta T(2)}{\Delta T(0)}^k \cdot \left[ S_T \cdot \Delta T(0) + S_v \cdot V(0) \right]^{k-1}$$

Equation finale 2:

$$\frac{\Delta T(1)}{\Delta T(2)} = \frac{y}{x} \cdot \sqrt{\frac{\Delta T_m^2(2) + S_t^2 \cdot (x \cdot \Delta \tau)^2}{\Delta T_m^2(1) + S_t^2 \cdot (y \cdot \Delta \tau)^2}}$$

dans lesquelles équations

$$v(0) = \frac{dT}{dt} \qquad \frac{y}{x} = \frac{T'_s - T_m(0)}{T_m(2) - T'_s}$$

Grandeurs de mise à l'échelle:

$$S_v = \frac{1}{v(0)} \qquad S_T = \frac{1}{dT_E} \qquad S_t = \frac{1}{dt_E}$$

où

$\Delta T_m$ est un intervalle de température associé à l'énergie absorbée,
k représente la numérotation d'un intervalle de temps, portée dans le sens rétrograde sur la figure 1;
$v_k$ étant le taux de variation de la température pendant l'intervalle k, et l'instant d'atteinte de la température souhaitée à coeur de la masse est déterminé pour chaque étape de chauffage ou de refroidissement en utilisant des capteurs d'énergie thermique, par exemple des thermofluxmètres, des débitmètres ou des compteurs électriques selon la forme de l'énergie thermique apportée ou prélevée.

**2.** Procédé selon la revendication 1, **caractérisé en ce que** la masse est métallique et soumise à un traitement thermique tel que, homogénéisation, préchauffage avant laminage ou extrusion, restauration, recuit, mise en solution, durcissement structural, cémentation, nitruration.

**3.** Procédé selon la revendication 2, pour les substances dont la transformation de toute la masse est obtenue par énergie d'activation thermique.

**Patentansprüche**

**1.** Verfahren zur Steuerung der Wärmezu- resp. -abführung an eine thermisch zu behandelnde Masse eines Gutes, um die Gesamtheit dieser Masse auf eine gewünschte Temperatur zu bringen, bei welchem Verfahren die genannte Masse in sich folgenden Etappen erhitzt oder abgekühlt wird, welche Etappen die momentanen Transformationsphasen und die Endtransformationsphasen der gesamten Masse des Gutes berücksichtigen, wobei das Verfahren optimisiert wird bezüglich Energie und Zeit in Abhängigkeit von ausgewählten Kriterien, welche durch die beiden folgenden Schlussgleichungen ausgedrückt werden:

Schlussgleichung 1:

$$v_k = V(0) \cdot \frac{\Delta T(2)}{\Delta T(0)}^k \cdot \left[ S_T \cdot \Delta T(0) + S_V \cdot V(0) \right]^{k-1}$$

Schlussgleichung 2:

$$\frac{\Delta T(1)}{\Delta T(2)} = \frac{y}{x} \cdot \sqrt{\frac{\Delta T_m^2(2) + S_t^2 \cdot (x \cdot \Delta\tau)^2}{\Delta T_m^2(1) + S_t^2 \cdot (y \cdot \Delta\tau)^2}}$$

worin

$$v(0) = \frac{dT}{dt} \qquad \frac{y}{x} = \frac{T'_s - T_m(0)}{T_m(2) - T'_s}$$

Massstabgrössen:

$$S_v = \frac{1}{v(0)} \qquad S_T = \frac{1}{dT_E} \qquad S_t = \frac{1}{dt_E}$$

worin $\Delta T_m$ ein der absorbierten Energie zugeordnetes Temperaturintervall bedeutet, k die Nummerierung eines Zeitinterwalls darstellt, in rücklaufender Richtung in die Figur 1 eingetragen;

$v_k$ stellt den Temperaturänderungsgrad während dem Intervall k dar, und der Moment des Erreichens der gewünschten Temperatur im Zentrum der Masse wird für jede Heiz- oder Abkühletappe bestimmt, unter Verwendung von Messeinrichtungen für thermische Energie, wie z.B. Thermofluxmetern, Durchflussmetern oder Elektrozählern, je nach Art der zu- oder abgeführten thermischen Energie.

2. Verfahren nach Anspruch 1 **dadurch gekennzeichnet, dass** die Masse eine metallische Masse ist und einer thermischen Behandlung wie Homogenisierung, Vorerhitzung vor dem Laminieren oder dem Strangpressen, Restauration, Ausglühen, Schmelzen, Strukturhärten, Zementierung oder Nitrieren, unterzogen wird.

3. Verfahren nach Anspruch 2 für Substanzen bei denen die Transformation der gesamten Masse durch thermische Aktivierungsenergie durchgeführt wird.

**Claims**

1. Process for the control of heat supply or removal to a mass of material to be thermally treated in order to bring the totality of this mass on a desired temperature, in which process said mass is heated or cooled in successive stages which take into account transient transformation phases and final transformation phases of the whole mass of material, the process being optimised with respect to energy and time in function of the chosen criterions expressed by the two following equations:

Final equation 1:

$$v_k = V(0) \cdot \frac{\Delta T(2)}{\Delta T(0)} k \cdot \left[ S_T \cdot \Delta T(0) + S_v \cdot V(0) \right]^{k-1}$$

Final equation 2:

$$\frac{\Delta T(1)}{\Delta T(2)} = \frac{y}{x} \cdot \sqrt{\frac{\Delta T_m^2(2) + S_t^2 \cdot (x \cdot \Delta \tau)^2}{\Delta T_m^2(1) + S_t^2 \cdot (y \cdot \Delta \tau)^2}}$$

in which equations

$$v(0) = \frac{dT}{dt} \qquad \frac{y}{x} = \frac{T'_s - T_m(0)}{T_m(2) - T'_s}$$

Scale sizes:

$$S_v = \frac{1}{v(0)} \qquad S_T = \frac{1}{dT_E} \qquad S_t = \frac{1}{dt_E}$$

wherein $\Delta T_m$ is a temperature interval associated with the absorbed energy, k represents the numbering of an interval of time reported in the retrograde direction in Figure 1;
$v_k$ being the rate of temperature change during the interval k, and the moment of reaching the desired temperature in the centre of the mass is determined for each heating or cooling stage by using captors of thermal energy, for example thermofluxmeters, flowmeters or electrical current meters depending from the kind of thermal energy supplied or removed.

2. Process as claimed in claim 1, **characterized in that** mass is a mass of metal and is subjected to a thermal treatment such as homogenisation, preheating before lamination or extrusion, restoration, annealing, solution, structural hardening, cementation, nitration.

3. Process as claimed in claim 2, for materials of which the transformation of the whole mass is obtained by thermal activation energy.

FIG.1

Fig 2